# NEUE EUROPÄISCHE PATENTSCHRIFT

(11) **EP 0 278 262 B2**
(45) Veröffentlichungstag und Bekanntmachung des Hinweises auf die Entscheidung über den Einspruch: **24.07.1996**
(45) Hinweis auf die Patenterteilung: 12.12.1990
(21) Anmeldenummer: 88100670.4
(22) Anmeldetag: 19.01.1988
(51) Int. Cl.: F23G 5/30

(54) **Wirbelschichtofen zur Müllverbrennung**
Fluidised-bed furnace for burning refuse
Four à lit fluidisé pour la combustion des ordures

(30) Priorität: 24.01.1987 DE 3702089
(43) Veröffentlichungstag der Anmeldung: 17.08.1988
(73) Patentinhaber: FORSCHUNGSZENTRUM JÜLICH GMBH, 52425 Jülich (DE)
(72) Erfinder: Wolf, Josef, Dr., D-5170 Jülich (DE)

(56) Entgegenhaltungen:
- EP-A- 0 162 748
- WO-A-81/01873
- DE-A- 2 624 302
- DE-B- 2 104 485
- FR-A- 2 582 541
- FR-A- 2 586 941
- GB-A- 2 078 052
- GB-A- 2 178 674
- US-A- 3 397 657
- US-A- 4 032 305
- US-A- 4 442 797
- US-A- 4 469 050
- "Umweltfreundliche Kraftwerkstechnologie für Kohlekraftwerke", Vor- träge eines Seminars veranstaltet von der Projektleitung Energieforschung der Kernforschungsanlage Jülich GmbH vom 6. bis 9. Oktober 1980

## Beschreibung

Die Erfindung bezieht sich auf einen Wirbelschichtofen zur Verbrennung von Abfällen mit einer unteren Zone (1) höherer Teilchendichte und Gaszutritt über einen Siebboden (3) mit Abfallaufgabe (7) am oberen Ende und Austrag (8) von Feststoff am unteren Ende sowie einer daran anschließenden als zirkulierende Wirbelschicht ausgebildeten oberen Zone (2) geringerer Teilchendichte und höherer Gasgeschwindigkeit und Feinkorn-Rezirkulierung über Zyklon (5) und Rückführungsrohr.

Die in Anbetracht steigenden Wohlstandes und hoher Bevölkerungsdichte anwachsenden Müllmengen lassen sich nicht mehr durch einfache Deponie bewältigen. Das gilt in besonderem Maße für Spezial- und Giftmüll.

Es gibt daher bereits eine Vielzahl von kommunalen Müllverbrennungsanlagen, die vornehmlich als Schacht- oder Drehöfen ausgebildet und mit einer nachgeschalteten Gasreinigung zur Beseitigung oder auch nur Verminderung schädlicher Komponenten der Verbrennungsgase wie Staub, Metalldampf, Halogen, SO₂, SO₃, CO, NOₓ etc. versehen sind.

Solche Anlagen bilden (mehr oder minder) sekundär giftige Stoffe wie Dioxine und Halogenaromaten in nicht zu vemachlässigender Menge, die von den üblichen Reinigungsanlagen nicht ausreichend abgefangen werden. Man bemüht sich daher um einen Abbau in einer mit zusätzlichem ("sauberem") Brennstoff beheizten Nachverbrennungsstufe bei sehr hoher Temperatur und langer Verweilzeit.

Es wurde auch schon eine Müllverbrennung im zirkulierenden Wirbelbett insb. für Sondermüll beschrieben, bei der Abfall und Kalk gemeinsam in den Verbrennungskreis eingespeist werden, der mit einem heißen Zyklon mit Rückführungsrohr für die abgeschiedenen Feststoffe versehen ist. Diese Anlage kann mit Flüssigabfall oder zerkleinertem Festmüll betrieben werden und scheint vomehmlich für Sondermüll gleichbleibender Qualität geeignet, und sie bedingt ein feines Aufmahlen der Feststoffe.

Gemäß der US-PS 4 469 050 wird eine Abwandlung des zirkulierenden Wirbelschichtstyps beschrieben, bei der eine obere und eine untere Zone unterschieden werden. In die untere gekühlte Zone des insgesamt im zirkulierenden Wirbelschichtsbereich betriebenen Ofens wird brennbares Material - ggfs. Hausmüll - eingespeist, das zumindest teilweise in die obere Zone mitgenommen wird, wo durch tangential eingeblasene Zusatzluft eine turbulente Strömung herbeigeführt wird, um so eine effektivere Umsetzung bei höherer spezifischer Wärmeabgabe zu erzielen. Zwischen dem vertikal zylindrischen Ofen und dem für die Zirkulation des gekörnten Materials notwendigen Zyklon ist gegebenenfalls zur Bewältigung der Druckunterschiede eine als "bubbling bed" ausgebildete Schleuse vorgesehen. In der Anlage wird neben dem eingespeisten brennbaren Material Asche oder Sand oder anderes im Inertmaterial in Umlauf gehalten. Ein Ascheaustrag befindet sich am unteren Ende des vertikalen Ofen.

Des weiteren sind Wirbelschichtanlagen mit sog."bubbling bed" oder "rotierendem" Wirbelbett für die Müllverbrennung bekannt (s. US-PS 3 397 657 und DE-AS 2 104 485). Diese Anlagen sind auch für die Verbrennung grob vorzerkleinerter Feststoffe mit einem nicht fluidsierbaren Anteil an unbrennbaren Rückständen geeignet. Die relativ geringe Betthöhe und begrenzte Quervermischung im Bett führt jedoch zu einem verminderten Ausbrand und höheren Restgift gehalt der Abgase.

Als "bubbling bed" wird ein Wirbelschichtzustand bezeichnet, der sich bei relativ geringen Gasgeschwindigkeiten einstellt, bei denen eine Fluidisierung des Kornmaterials stattfindet, aber praktisch nur eine vernachlässigbare Teilchenmitnahme im Abgas, so daß keine Teilchenrückführung erforderlich ist. Ein solches Bett zeichnet sich durch eine relativ hohe Teilchendichte und eine definierte Bettoberfläche aus.

Aufgabe der Erfindung ist daher die Schaffung einer Müllverbrennungsanlage, mit der Müll schwankender Zusammensetzung verbrannt werden kann und die einen geringeren Nachreinigungsaufwand erfordert bzw. weniger zur Abgabe sekundär gebildeter Giftstoffe neigt und unter Verzicht auf mit Öl oder Gas beheizte Nachverbrennungsstrecken und weiteren Nachreinigungsaufwand die geforderte Abgasqualität einhält.

Der zu diesem Zweck entwickelte erfindungsgemäße Wirbelschichtofen der eingangs genannten Art ist gekennzeichnet durch Mittel zur Ausbildung der unteren Zone (1) als "bubbling bed" mit Inertmaterialumlauf durch diese Zone, durch einen Kreislauf (9) für die Rezirkulierung des Inertmaterials vom Austrag (8) zur Abfallaufgabe (7) und durch eine Zugabestelle (12) für Additive im unteren Bereich der oberen Wirbelzone (2).

In die untere Zone gelangt das Gas durch einen "Siebboden", worunter jede Form von Verteilerboden verstanden wird, über den Gas in eine Wirbelschicht eingeführt werden kann.

Für die Verbrennung von kohlehaltigem Material oder von Brennstoffen, wie Kohle, Koks oder Öl sind zwar bereits Wirbelschichtöfen bekannt: So wird in der EP-A 42 418 eine Anordnung zur Wirbelschichtverbrennung in zwei Zonen beschrieben: einer unteren Zone mit höherer Teilchendichte, gröberen Teilchen und bezüglich des Sauerstoffs unter-stöchiometrischen Bedingungen, an deren unterem Ende das zu verbrennenden Material aufgegeben wird und einer oberen Zone mit feinteiligem Material und oxidierenden Bedingungen, in deren unteren Bereich Sekundärluft eingeblasen wird. Der am oberen Ende ausgetragene Feststoff wird in einem Zyklon abgeschieden und nach Kühlung zumindest teilsweise in den unteren und mittleren Bereich des Wirbelschichtofen zurückgeführt, um dessen Temperatur zu steuem, die in der unteren Zone niedriger als in der oberen Zone eingestellt wird.

Gemäß der DE-A1-26 24 302 wird eine Wirbelschichtverbrennung mit Feststoffrückführung nach Wirbelschichtkühlung betrieben, bei der die Teilchen dichte im Ofen stetig von unten nach oben abnimmt. Die Feststoffrezyklierung sorgt für eine hohe Temperaturkonstanz im Wirbelbett, selbst bei relativ niedrigen Verbrennungstemperaturen. Die Verbrennung erfolgt in zwei Stufen durch entsprechende Zufuhr von Sekundärluft in einem höheren Niveau.

Von diesen Verfahren unterscheidet sich die erfindungsgemäße Müllverbrennung im wesentlichen durch die intensive Rezyklierung von Material im unteren Bettbereich, das an dessen oberem Ende zugeführt und unten abgezogen wird und die bevorzugte Auslegung dieses unteren Bereichs als rotierende Wirbelschicht. In diesem unteren Bereich unterliegen die Feststoffe einer intensiven Ausheiz- und Mahlwirkung, wobei der stetige Austrag am unteren Ende eine Aufgabe auch von nicht wirbelfähigem Material erlaubt.

Die erfindungsgemäße Kombination einer unteren dichteren Wirbelbettzone mit Feststoffumwälzung und einer darüberliegenden zirkulierenden Wirbelschichtzone hat gegenüber bekannten Anordnungen zur Müllverbrennung in der Wirbelschicht folgende Vorteile:

Gegenüber dem "bubbling bed" oder der rotierenden Wirbelschicht zeichnet sich die erfindungsgemäße Müllverbrennung durch einen besseren Ausbrand, bessere Schadstoffabtrennung und bessere Ausnutzung von Absorbermaterial sowie durch höhere spezielle Leistung und die Möglichkeit einer gestuften Verbrennung aus. Gegenüber der zirkulierenden Wirbelschicht wird ein breiteres Anwendungsgebiet hinsichtlich Konsistenz und Heizwert erreicht und vor allem wird hierdurch ermöglicht, daß nichtfluidisierbare Abfälle undloder Abfälle mit nichtfluidisierbaren Rückständen durchgesetzt werden können, welche lediglich auf eine Kantenlänge von 3 - 4 cm zerkleinert sind.

Beim erfindungsgemäßen Wirbelschichtofen wird der Müll zusammen mit Inertmaterial wie insb. Sand im oberen Bereich der unteren Wirbelzone aufgegeben, in der eine intensive Materialumwälzung im dichten Fließzustand erfolgt. Umwälzung und Austrag der ggf. unfluidierbaren Rückstände innerhalb des Brennraumes und aus diesem kann dabei über eine entsprechende Verteilung der Gaszuführung am Ofenboden unter Ausbildung eines rotierenden Bettes erreicht werden.

Der Sand sorgt für eine gleichmäßige Temperatur und erhebliche Mahlwirkung, wobei durch genügende Sauerstoffzufuhr ein guter Ausbrand bei nicht zu hoher Temperatur erreicht werden kann. Das vorhandene Inertmaterial verhindert Temperaturspitzen und Bereiche ungenügender Erwärmung, und das in die obere Zone gelangende Gas und Feinkorn wird dort insb. unter weiterem Luftzusatz nachverbrannt und mit Zuschlagstoffen, insb. feinteiligem Kalk, umgesetzt, der für eine SO₂/SO₃- und Cl-Entgiftung und ggf. Adsorption weiterer Giftstoffe sorgt.

Auf diese Weise können Mischabfälle mit schwankendem Heizwert ggf. unter Altölzusatz, Schlämme, halogenhaltige organische Abfälle etc. verbrannt werden, wobei die NOₓ-Bildung durch entsprechende Begrenzung der Temperatur unterdrückt und die Erzeugung von giftigen Substanzen durch unvollkommene Verbrennung und Sekundärreaktionen verhindert werden kann.

Die höhere Transportgeschwindigkeit in der oberen Zone kann durch Einblasen von Zusatzgas oder durch eine Querschnittsverengung erreicht werden.

Ofendurchsatz und -größe sind beim Wirbelschichtofen vergleichbar mit denjenigen von üblichen Schachtöfen.

Nachfolgend wird die Erfindung unter Bezugnahme auf die angefügten Zeichnungen beschrieben; es zeigen schematisch:
Figur 1 einen erfindungsgemäßen Wirbelschichtofen; und
Figur 2 den unteren Bereich einer Variante zu Fig. 1

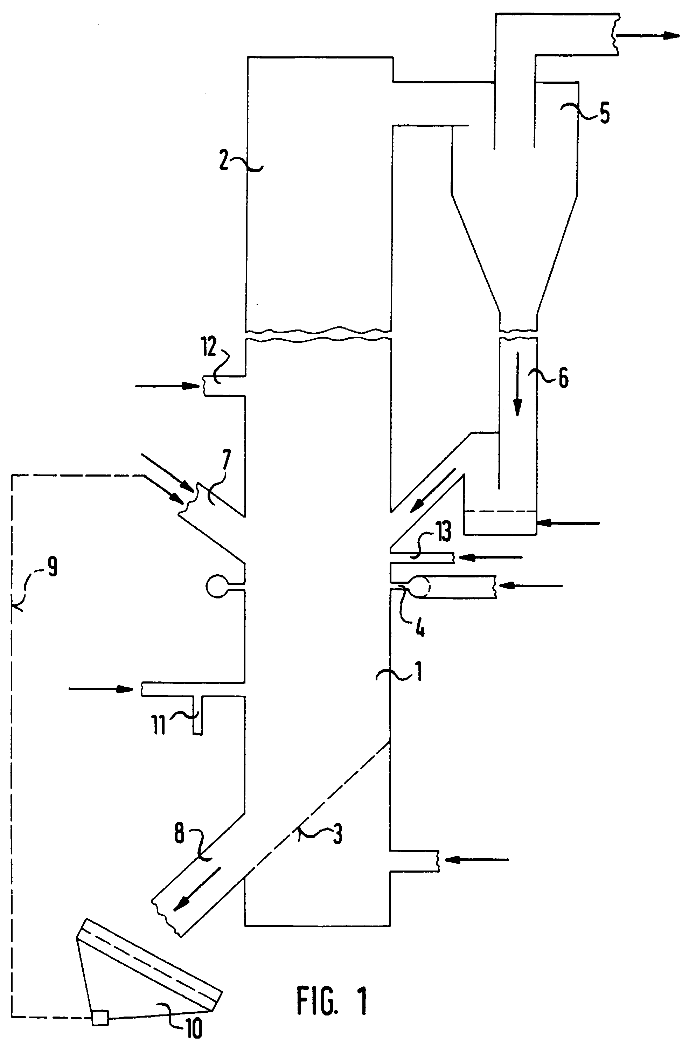

Der in Fig. 1 skizzierte Wirbelschichtofen umfaßt eine untere Zone 1, die mit einer Leerrohrgeschwindigkeit von 0,5 - 1 m/s als "bubbling bed" und eine obere Zone 2, die mit 2 - 5 m/s als zirkulierende Wirbelschicht betrieben wird. Die aus Platzgründen unterbrochen dargestellte Zone 2 ist wesentlich (etwa um einen Faktor 3 - 10) länger als die Zone 1 und hat z. B. eine Länge von ca. 10 m, während die Zone 1 z. B. ca. 1 m lang ist.

Die Verbrennungsluft wird in den unteren Teil über einen Siebboden 3 und am Übergang zur oberen Zone über eine Ringleitung 4 in das Wirbelbett eingeleitet.

Der mit dem Abgas aus der oberen Zone ausgetragene Feststoff wird mittels eines Zyklons 5 abgeschieden und über eine nichtmechanische Drucksperre 6 in das Wirbelbett zurückgeführt. Durch eine leichte Fluidisierung wird ein einwandfreies Fließverhalten der Feststoffe in der Drucksperre erreicht.

Bei der Verarbeitung von festen Abfällen wird der als Bettmaterial dienende Sand als Transporthilfe für den Eintrag der Abfälle 7 und den Austrag der unverbrannten Rückstände 8 über einen nicht dargestellten Pufferbehälter im Kreislauf geführt (siehe 9). Die Abtrennung der Rückstände erfolgt über ein Rüttelsieb 10.

Alternativ oder ergänzend zu den Festabfällen zu verbrennende flüssige Abfallstoffe werden mittels Luft in die untere Zone über 11 eingeblasen.

Die Zudosierung von Kalkstein und/oder anderen Additiven über 12 erfolgt, wie dargestellt, in den unteren Bereich der oberen Zone.

Die mit dem Abgas den Zyklon 5 passierende Flugasche, kann, falls erforderlich, im Anschluß an eine Verbrennungskampagne aus den in der Abbildung nicht dargestellten Abgasfiltern zur Nachbehandlung über 13 in das Wirbelbett zurückgeführt werden.

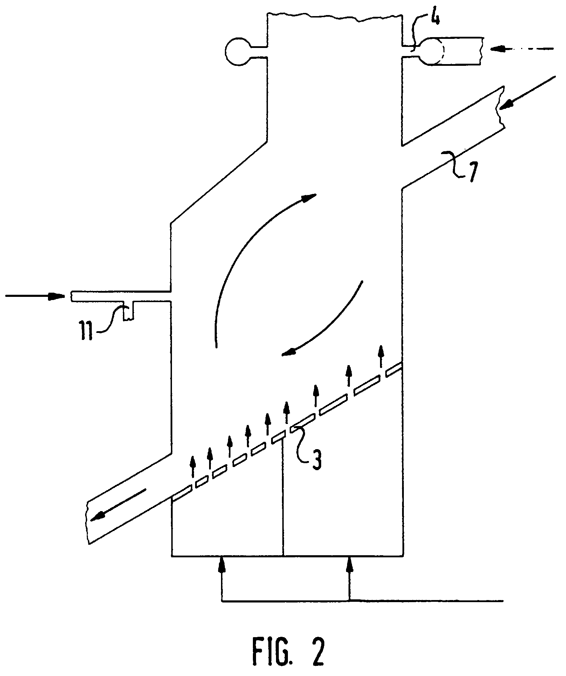

Fig. 2 zeigt eine Variante der unteren Zone: Durch unterschiedliche Luftverteilung am Siebboden 3 wird eine rotierende Bewegung des Wirbelbettes erzeugt, welche die Durchmischung verbessert und den Transport der unbrennbaren Bestandteile unterstützt.

Die erfindungsgemäße Wirbelschichtverbrennung hält einem Wirtschaftlichkeitsvergleich mit herkömmlichen Drehrohr-Müllverbrennungsanlagen durchaus Stand:

Der Verzicht auf Nachverbrennungsstufe und Abgaswäsche hält einerseits die Investionskosten niedrig, andererseits wird hierdurch, in Verbinding mit der erreichbaren hohen spezifischen Leistung, das Bauvolumen geringer als z.B. bei einer vergleichbaren Anlage mit Drehrohrofen.

Verfahrensbedingt ist zwar eine höhere Gebläseleistung erforderlich, der hierdurch verursachte Aufwand wird jedoch durch den geringeren Bedarf an Zusatzbrennstoff mehr als ausgeglichen.

Das Verfahren erlaubt einerseits die Auslegung kleiner transportabler Einheiten, andererseits zeigen in Betrieb befindliche Anlagen unterschiedlicher Wirbelbettvarianten mit Durchsätzen von mehr als 10 t/h, daß eine Vergrößerung in einen für den Verwendungszweck günstigen Durchsatzbereich möglich ist.

## Patentansprüche

1. Wirbelschichtofen zur Verbrennung von Abfällen mit einer unteren Zone (1) höherer Teilchendichte und Gaszutritt über einen Siebboden (3) mit Abfallaufgabe (7) am oberen Ende und Austrag (8) von Feststoff am unteren Ende sowie einer daran anschließenden als zirkulierende Wirbelschicht ausgebildeten oberen Zone (2) geringerer Teilchendichte und höherer Gasgeschwindigkeit und Feinkorn-Rezirkulierung über Zyklon (5) und Rückführungsrohr,
**gekennzeichnet durch**
Mittel zur Ausbildung der unteren Zone (1) als "bubbling bed" mit Inertmaterialumlauf durch diese Zone, durch einen Kreislauf(9) für die Rezirkulierung des Inertmaterials vom Austrag (8) zur Abfallaufgabe (7) und durch eine Zugabestelle (12) für Additive im unteren Bereich der oberen Wirbelzone (2).

2. Wirbelschichtofen nach Anspruch 1,
**gekennzeichnet durch**
eine Zusatzgaseingabe am Übergang zur oberen Wirbelzone.

3. Wirbelschichtofen nach Anspruch 1 oder 2,
**dadurch gekennzeichnet**,
daß das umlaufende Inertmaterial der unteren Zone Sand umfaßt.

4. Wirbelschichtofen nach einem der vorangehenden Ansprüche,
**gekennzeichnet durch**
Mittel zur Ausbildung der unteren Wirbel zone als rotierende Wirbelschicht.

## Claims

1. A fluidised-bed furnace for the burning of refuse, having a lower zone (1) of higher particle density and gas admission via a perforated base (3) with a refuse feed (7) at the upper end and discharge (8) of solids at the lower end, and having an adjoining upper zone (2) of lower particle density and higher gas velocity and constructed as a circulating fluidised bed, and with recirculation of fine grain via a cyclone (5) and return pipe,
characterised by
means for constructing the lower zone (1) as a "bubbling bed" with circulation of inert material through this zone, by a circuit (9) for the recirculation of the inert material from the discharge (8) to the refuse feed (7) and by an addition point (12) for additives in the lower region of the upper fluidised zone (2).

2. A fluidised-bed furnace according to claim 1,
characterised in that
additional gas is blown in at the transition to the upper fluidised zone.

3. A fluidised-bed furnace according to either one of the preceding claims,
characterised in that
the circulating inert material of the lower zone comprises sand.

4. A fluidised-bed furnace according to any one of the preceding claims,
characterised in that
the lower fluidising zone is arranged for the production of a rotating fluidised bed.

## Revendications

1. Four à lit fluidisé d'incinération de déchets ayant une zone inférieure (1) de grande densité de particules et une entrée de gaz par un fond (3) perforé avec chargement (7) des déchets à l'extrémité supérieure et défournement (8) de matière solide à l'extrémité inférieure, ainsi qu'une zone supérieure (2) de petite densité de particules et de plus grande vitesse des gaz qui s'y raccorde et qui est constituée en lit fluidisé circulant et une recirculation des fines par un cyclone (5) et un conduit de recyclage,
caractérisé par des moyens pour constituer la zone inférieure (1) en "bubbling bed" avec une circulation de matière inerte dans cette zone par un circuit (9) de recirculation de la matière inerte du défournement (8) au chargement (7) des déchets et par un point (12) d'addition d'additifs dans la partie inférieure de la zone supérieure (2) fluidisée.

2. Four à lit fluidisé suivant la revendication 1,
caractérisé en ce que du gaz supplémentaire est insufflé à la transition vers la zone supérieure de fluidisation.

3. Four à lit fluidisé suivant l'une des revendications précédentes,
caractérisé en ce que la matière inerte en circulation de la zone inférieure comprend du sable.

4. Four à lit fluidisé suivant l'une des revendications précédentes,
caractérisé en ce que la zone de fluidisation inférieure est constituée de manière à produire un lit fluidisé tournant.
